(19) **Europäisches Patentamt / European Patent Office / Office européen des brevets**

(11) **EP 4 178 743 B1**

(12) **EUROPEAN PATENT SPECIFICATION**

(45) Date of publication and mention
of the grant of the patent:
**29.01.2025  Bulletin 2025/05**

(51) International Patent Classification (IPC):
**B22D 11/00** (2006.01)     **C22C 38/12** (2006.01)
**C22C 38/14** (2006.01)     **C22C 38/32** (2006.01)
C21C 7/00 (2006.01)     C21C 7/04 (2006.01)
C21C 7/06 (2006.01)

(21) Application number: **21737180.6**

(22) Date of filing: **07.07.2021**

(52) Cooperative Patent Classification (CPC):
**B22D 11/001; C22C 38/12; C22C 38/14;**
**C22C 38/32;** C21C 7/0037; C21C 7/0087;
C21C 7/04; C21C 7/06; C21C 2007/0018;
Y02P 10/20

(86) International application number:
**PCT/IB2021/056078**

(87) International publication number:
**WO 2022/009108 (13.01.2022 Gazette 2022/02)**

(54) **A METHOD OF CASTING A STEEL SEMI-PRODUCT WITH HIGH TITANIUM CONTENT**

VERFAHREN ZUM GIESSEN EINES STAHLHALBZEUGS MIT HOHEM TITANGEHALT

MÉTHODE DE MOULAGE D'UN SEMI-PRODUIT EN ACIER À HAUTE TENEUR EN TITANE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Validation States:
**MA**

(30) Priority:  **08.07.2020  PCT/IB2020/056418**

(43) Date of publication of application:
**17.05.2023  Bulletin 2023/20**

(73) Proprietor: **ArcelorMittal**
**1160 Luxembourg (LU)**

(72) Inventors:
• **BONNET, Frédéric**
  **54150 Avril (FR)**
• **DAESCHLER, Valerie**
  **57280 Maizières-lès-Metz (FR)**
• **MASTRORILLO, Thierry**
  **57283 Maizières-Lès-Metz (FR)**

(74) Representative: **Lavoix**
  **2, place d'Estienne d'Orves**
  **75441 Paris Cedex 09 (FR)**

(56) References cited:
CN-A- 111 363 879     JP-A- 2007 231 372
KR-B1- 102 100 799     US-A1- 2013 174 942
US-B1- 6 174 347

# EP 4 178 743 B1

**Description**

The invention is related to the casting of steel semi-product having a high titanium content.

FeTiB2 steels have been attracting much attention due to their excellent high elastic modulus E, low density and high tensile strength which makes them very promising for the automotive industry, where vehicle lightening, and safety are constant preoccupations. However, those steels are difficult to manufacture due to constraints linked to the precipitates to be formed. Different solutions have thus been developed to produce such steels and notably to solve castability issues.

US20130174942 discloses a FeTiB2 steel comprising between 2,5 and 7,2%w of Ti which is cast at a casting temperature not exceeding more than 40°C above the liquidus temperature of said steel. This allows to have a fine microstructure.

EP3612657 discloses a specific composition of the steel wherein the content in free Ti of the steel is of at least 0.95%, and owing to this content in free Ti, the structure of the steel remains mainly ferritic at any temperature below the liquidus temperature. As a result, the hot hardness of the steel is significantly reduced as compared to the steels of the state of the art, so that the castability is increased. Casting is preferably performed in the form of thin slabs.

However, whatever the type of casting method, it requires that the liquid steel arrives at the tapping station with the right composition, temperature and viscosity. For those specific grades this step is one of the most difficult to handle. During the steelmaking, depending on the slag composition and temperature, some components of the slag may precipitate. In the case of high titanium grades, titanium tends to partition and migrate towards the slag and as titanium oxides tend to precipitate at the casting temperature, the crystallisation rates of the slag increase drastically. A good crystallization rate for a steelmaker is when samples of molten metal may be taken, while in the same time, such slag is still covering the molten metal to avoid contact with air.

There is so a need for a casting method allowing to cast steel semi-products having a high content in titanium, i.e. superior to 3,5% in weight.

The scope of the present invention is defined by independent claim 1, and further embodiments of the invention are specified in dependent claims 2-13.

One embodiment is also related to a steelmaking slag having following composition, expressed in content by weight:

$$35\% \leq CaO \leq 55\%,$$

$$15\% \leq Al2O3 \leq 55\%,$$

while satisfying $0,7 \leq CaO2/Al2O3 \leq 2,$

$$0\% \leq MgO \leq 15\%,$$

$$TiOx < 20\%$$

less than 1% of each of the following compounds B2O3, SiO2, CrOx, MnO, NiO, FeOx, S, $0\% \leq CaF2 \leq 25\%$ remainder being oxides resulting from the impurities present in the molten metal.

In one embodiment of the method according to the invention, the liquid steel (also called molten metal), which may either come from an electrical arc furnace or from any steelmaking device such as a Basic Oxygen Furnace or a converter is subjected to a deoxidation step. At that stage the liquid steel usually has a temperature around 1650°C. To perform deoxidation, aluminium is added to the molten metal, usually during ladle tapping to promote homogeneous reaction of deoxidation. According to the invention aluminium is added so that quantity in the molten metal is superior or equal to 0,1% in weight, which is superior than the usual amount required for deoxidation of liquid steel. In a preferred embodiment aluminium is added so that quantity in the molten metal is superior or equal to 0,2% in weight. In a preferred embodiment it is superior or equal to 0,4% in weight. The oxides thus form migrate towards the top of the molten metal and increase the slag amount. The amount of aluminium to be added depends on the acceptable amount of titanium oxides in the slag to limit the slag crystallisation and of the parameters which control the titanium partitioning such as molten metal composition, slag composition and temperature. Among these parameters, main parameters are the titanium content in the molten metal, alloying elements in molten metal such as boron, manganese, chromium ... which can change the slag/metal equilibrium, respective temperature of molten metal and slag, slag weight / molten metal weight ratio, slag composition. Other slag oxides reducible by titanium such as SiO2, B2O3 must be avoided to limit titanium partitioning. Calculations of slag/metal thermodynamic equilibrium can be done when thermodynamic models and thermodynamic databases are available.

Thermodynamic calculations are achieved to optimize both aluminium amount to be added and slag composition, based on final $TiO_x$ target in the slag, molten metal composition and temperature during refining process. For each step of the refining process of the grade, aluminium content in the molten metal and slag composition is optimized to limit titanium partitioning and to guarantee $TiO_x$ target and limit slag crystallization.

To define optimum conditions, evolution of TiOx and crystallized fraction in the slag is calculated depending on the variability of temperature and molten metal & slag compositions. All those calculations are well known from the skilled person in the steelmaking area. If model & database are not available, slag/metal equilibrium at the laboratory or pilot scale can be done to simulate industrial conditions.

Addition of aluminium allow to deoxidize the molten steel but also to reduce the content of TiOx in the slag. One part of slag crystallization occurs through titanates precipitation, titanates being compounds of a titanium oxide combined with other oxide such as an aluminium oxide. By reducing the TiOx content in the slag, precipitation of titanates is limited, leading to lower fraction of crystal. Nature and crystallization rate of titanates can be more or less complex depending on slag composition.

Then, according to the method o the invention, mineral compounds containing aluminium and/or calcium and/or magnesium; such as lime $Ca(OH)_2$ or magnesia MgO, and up to 25% in weight of spar $CaF_2$ are added to the molten metal. According to the invention, those additions are done so as to reach and maintain a composition of the slag wherein the ratio of CaO versus $Al_2O_3$ (C/A) is comprised between 0,7 and 2. This composition allows to limit the crystallisation rate of the titanium oxides present in the slag by maximizing slag sulphur capacity.

Limitation of TiOx thanks to aluminium addition must indeed be associated to optimization of slag composition to optimize the nature and amount of titanates and limit their precipitation in the slag to promote low slag crystallization at the casting temperature.

In a preferred embodiment when the ratio is comprised between 1,4 and 2, the slag contains furthermore between of 6 and 25% in weight of spar $CaF_2$ and more preferentially between 6 and 12% in weight of spar CaF2. How to calculate and to control this ratio is well known form the man skilled in the art in the steelmaking domain. In another embodiment the ratio C/A is comprised between 0,9 and 1,3 and the slag comprises between 5 and 15% in weight of magnesia. In a third embodiment, this ratio is comprised between 1,4 and 2 and the slag contains between of 6 and 12% in weight of spar $CaF_2$ and between 5 and 15% in weight of magnesia MgO. Magnesia allows to decrease the liquidus temperature of slag. This last composition allows to further limit the crystallisation rate of the titanium oxides. The magnesia can be added to the melt and/or may come directly from the refractories surrounding the molten metal in the steelmaking vessel. The man skilled in the art knows from experience which quantity of magnesia will be dissolved from the refractories and which quantity needs to be added in order to reach the required content.

Thanks to this slag composition control and to the aluminium addition, the slag contains strictly less than 20% in weight of titanium oxides. In all embodiments the remainder slag composition comprises less than 1%w of $B_2O_3$, less than 1%w of $SiO_2$, less than 1%w of CrOx, less than 1%w of MnO, less than 1%w of NiO, less than 1%w of $FeO_x$. With the method according to the invention no deslagging is necessary before going to the next step which reduces the elaboration time of the steel.

After the mineral addition step, titanium is added to the melt in such a quantity to reach the targeted composition of the final semi-product which is at least superior or equal to 3,5% in weight. This is the nominal composition. This titanium may be added in form of sponge titanium or ferro-titanium pieces such as Fe-70%Ti or Fe-35%Ti, or pure Ti or Ferro-titanium wires.

After titanium addition the slag has the following composition:

$$35\% \leq CaO \leq 55\%,$$

$$15\% \leq Al2O3 \leq 55\%,$$

while satisfying $0,7 \leq CaO2/Al2O3 \leq 2$,

$$0\% \leq MgO \leq 15\%,$$

$$TiOx < 20\%$$

less than 1% of each of the following compounds B2O3, SiO2, CrOx, MnO, NiO, FeOx, S,

$$0\% \leq CaF2 \leq 25\%$$

remainder being oxides resulting from the impurities present in the molten metal.

Then the liquid steel thus formed is sent to the casting station to be cast in a form of a semi-product. The casting temperature is lower than or equal to T|iquidus+ 40°C, T|iquidus designating the liquidus temperature of the steel. In present case it is for example around 1330°C. By semi-product it is meant a steel slab, a thick strip or thin slab or any other product made by continuous casting, vertical casting, horizontal casting, roll casting, thin slab casting, bet casting, strip casting.

In another embodiment of a method according to the present disclosure, the semi-product to be cast contains at least 2% in Boron, boron which is added after the mineral addition step by injection of ferro-boron pieces such as Fe-18%B or ferro-boron wires. In a most preferred embodiment, this addition is performed during the mineral addition step.

In a preferred embodiment the steel semi-product has the following composition expressed in content by weight:

$$0,01\% \leq C \leq 0,2\%$$

$$3,5\% \leq Ti \leq 10\%$$

$$(0,45 \text{ x}Ti) - 1,35\% \leq B \leq (0,45 \text{ x}Ti) + 0,70\%$$

$$S \leq 0,03\%$$

$$P \leq 0,04\%$$

$$N \leq 0,05\%$$

$$O \leq 0,05\%$$

and optionally containing:

$$Si \leq 1,5\%$$

$$Mn \leq 3\%$$

$$Al \leq 1,5\%$$

$$Ni \leq 1\%$$

$$Mo \leq 1\%$$

$$Cr \leq 3\%$$

$$Cu \leq 1\%$$

$$Nb \leq 0,1\%$$

$$V \leq 0,5\%$$

and comprising precipitates of $TiB_2$ and optionally of $Fe_2B$, the balance being Fe and unavoidable impurities resulting from the elaboration. This preferred composition allows the steel to remain mainly ferritic at any temperature below the liquidus temperature and thus reduces castability issues.

One way for the steelmaker to perform the method according to the invention is first to define the target of titanium in the final semi-product and the casting temperature of this final semi-product. Then, to define which slag composition he wants to have within the given frame of the invention, i.e. remaining in the given range of C/A ratio, potentially adding spar, quantity of MgO provided by the refractories...depending on the crystallization volume he may tolerate at the casting. Finally, calculating, using known models, the amount of aluminium and other mineral additions needed to reach this defined slag composition.

For all the previously mentioned embodiments the different steps performed on the liquid steel may be performed indifferently in the same vessels, in different vessels, depending on the plant configuration. No specific equipment other than the ones classically used in a steel shop are needed.

Examples

The following trials presented hereunder are non-restricting in nature and must be considered for purposes of illustration only. They will illustrate the advantageous features of the present invention. It should be noted that the embodiments of the present disclosure is for the explanation of the present disclosure, and not for the limitation of the present invention. The scope of the present invention is defined in the appended claims.

*Calculation*

Calculation were performed using thermodynamic models as previously described, and which are known from the man skilled in the art. Considered temperature of slag was of 1350°C.

Considered parameters are the amount of titanium in the semi-product to be cast (%Ti), the ratio C/A with %CaO and %$Al_2O_3$ in the slag, the amount of CaF2 (or spar) in the slag and a target maximum amount of TiOx in the slag. Calculation were performed considering 15kg of slag per ton of hot metal

The content in magnesia MgO in slag was always considered at 10%w.

Calculation were performed considering 15kg of slag per ton of hot metal.

Given all this condition a percentage of crystallisation of the slag representing the percentage in volume of solid phase over the total slag volume was calculated. Thermodynamic calculation gives nature and amount of precipitating oxides into the liquid slag, knowing the volume of liquid slag it is thus possible to determine the percentage in volume of crystallized slag.

- Aluminium addition

In this set of examples, the target of titanium in the final product was varied between 2,5 and 10%. C/A ratio was set at 1,1, no CaF2 was added.

All parameters and results are summed up in table 1 below, trials numbers with a star * are not according to the invention.

**Table 1**

| N° | %Ti | C/A | %Al | %TiOx |
|---|---|---|---|---|
| 1* | 2,5 | 1,1 | 0,14 | 5% |
| 2* | 2,5 | 1,1 | 0 | **14,8** |
| 3 | 3,5 | 1,1 | 0,23 | 5% |
| 4* | 3,5 | 1,1 | 0 | **20** |
| 5 | 4 | 1,1 | 0,27 | 5% |
| 6* | 4 | 1,1 | 0 | **21,7** |
| 7 | 5 | 1,1 | 0,34 | 5% |
| 8* | 5 | 1,1 | 0 | **26,9** |
| 9 | 8 | 1,1 | 0,61 | 5% |
| 10* | 8 | 1,1 | 0 | **43,8** |
| 11 | 10 | 1,1 | 0,85 | 5% |
| 12* | 10 | 1,1 | 0 | **50,6** |

From this set of trials, when the target of titanium in the final product is superior or equal to 3,5%, the addition of aluminium is necessary to reduce the amount of TiOx into the slag and thus avoid crystallization of slag.

- C/A ratio

In this set of examples, the target of titanium in the final product was equal to 8 or 10. C/A ratio was varied from 0,5 to 2,3, no CaF2 was added.

Amount of aluminium added is set to 0,4%.

All parameters and results are summed up in table 2 below, trials numbers with a star * are not according to the invention. As previously explained the acceptable amount of crystallization rate depends on the process but an acceptable crystallization rate for a steelmaker is when slag covers the molten metal surface while still allowing sampling in molten metal.

**Table 2**

| N° | %Ti | C/A | %Al | % crystallization |
|----|-----|-----|-----|-------------------|
| 20* | 8 | <u>0,5</u> | 0,4 | 48,7 |
| 21 | 8 | 0,7 | 0,4 | 3,8 |
| 22 | 8 | 1,1 | 0,4 | 1,7 |
| 23 | 8 | 1,6 | 0,4 | 4,9 |
| 24 | 8 | 2 | 0,4 | 16,7 |
| 25* | 8 | <u>2,3</u> | 0,4 | 24,0 |
| 26* | 10 | <u>0,5</u> | 0,4 | 37,4 |
| 27 | 10 | 0,7 | 0,4 | 1,5 |
| 28 | 10 | 1,1 | 0,4 | 1,7 |
| 29 | 10 | 1,6 | 0,4 | 4,1 |
| 30 | 10 | 2 | 0,4 | 15,2 |
| 31 * | 10 | <u>2,3</u> | 0,4 | 23,2 |

From this set of trials, the addition of mineral compounds to get a slag composition within the C/A range of the invention allows to reduce the crystallisation rate of the slag.

- Influence of CaF2 on the aluminium addition

In this set of examples, the target of titanium in the final product was set at 8%.

C/A ratio was set at 1,1 and spar (CaF2) content was varied from 0 to 20%w.

Aluminium content was calculated so as to reach a content of titanium oxides in slag equals to 5%.

All parameters and results are summed up in table 3 below.

**Table 3**

| N° | %Ti | C/A | %CaF2 | %Al | %TiOx |
|----|-----|-----|-------|-----|-------|
| 40 | 8 | 1,1 | 0 | 0,61 | 5 |
| 41 | 8 | 1,1 | 5 | 0,55 | 5 |
| 42 | 8 | 1,1 | 10 | 0,48 | 5 |
| 43 | 8 | 1,1 | 15 | 0,4 | 5 |
| 44 | 8 | 1,1 | 20 | 0,33 | 5 |

Addition of CaF2 allows to reduce the amount of aluminium needed to reduce TiOx content in slag and thus to limit crystallization.

- Influence of CaF2 on the crystallization rate

In this set of examples, the target of titanium in the final product was fixed at 8%.

C/A ratio was varied from 1,1 to 2 and spar (CaF2) content was either 0 or 12%w. Aluminium content was fixed to 0,4%

All parameters and results are summed up in table 4 below.

**Table 4**

| N° | %Ti | C/A | %CaF2 | %Al | % crystallization |
|----|-----|-----|-------|-----|-------------------|
| 52 | 8 | 1,1 | 0 | 0,4 | 1,7 |
| 53 | 8 | 1,1 | 12 | 0,4 | 0,0 |
| 54 | 8 | 1,6 | 0 | 0,4 | 4,9 |
| 55 | 8 | 1,6 | 12 | 0,4 | 0 |
| 56 | 8 | 2 | 0 | 0,4 | 16,4 |
| 57 | 8 | 2 | 12 | 0,4 | 8,7 |

The addition of spar CaF2 allows to further limit the crystallization rate of the slag.

*Pilot trials*

Trials were performed on a pilot to reproduce steel behaviour at a small scale. Molten metal whose initial composition is given in table 5 was poured into a magnesia crucible placed into a furnace under given conditions of temperature and atmosphere. The presence of argon and thus of a non-oxidizing atmosphere is linked to the configuration of the pilot and is not necessary in industrial conditions. Balls of slag, composition of which are given in table 5, were then added on the top of the molten metal. Results in terms of crystallization are also given in Table 5. Trial A608 was performed with a method which does not correspond to the invention, while the five other trials are according to the invention. For this trial a standard aluminium value for deoxidation was added to the steel, not more as in the method according to the invention.

Trial A608 is the only one presenting a slag crystallisation at the casting temperature, thus preventing further casting of the steel. The method according to the invention allows thus to avoid crystallisation of the slag at the required casting temperature.

Furthermore, with a method according the partitioning of titanium is preventing and thus less titanium addition is needed to reach the targeted composition.

**Table 5**

| Trial N° | %Al added | Conditions | Slag composition | | | | | | Steel | | | | |
|---|---|---|---|---|---|---|---|---|---|---|---|---|---|
| | | | C/A | CaF2 | MgO | $B_2O_3$ | TiO2 | Slag crystallization | B | | Ti | | |
| | | | | | | | | | Initial | Final | Initial | Final | ΔTi |
| A608* | 0.04% | 1390°C Ar-1atm | 1,6 | - | 3,4 | - | **29,5** | **YES** | 1,95 | 2,05 | 5,83 | 3,49 | -40,1% |
| A598 | 0,4% | 1425°C Ar-1atm | 1 | - | 8,5 | 0,35 | 7,7 | NO | 1,92 | 1,91 | 5,96 | 5,85 | -1,8% |
| A596 | 0,4% | 1450°C Ar-1atm | 1,1 | - | 7,3 | 0,26 | 4,65 | NO | 1,76 | 1,75 | 5,86 | 5,78 | -1,4% |
| A602 | 0,4% | 1360°C Ar-1atm | 1,1 | - | 7,1 | 0,4 | 4,2 | NO | 1,95 | 1,98 | 5,85 | 5,62 | -3,9% |
| A601 | 0,4% | 1380°C Ar-1atm | 0,7 | 7,4 | 23,4 | 0,9 | 4,9 | NO | 1,95 | 2,01 | 5,83 | 5,52 | -5,3% |
| A610 | 0,6% | 1530°C Ar-0,25atm | 0,7 | 5-6,5 | 4,7-12,6 | - | 0-20 | NO | 1,95 | 2,04 | 5,83 | 6,08 | +4,3% |

EP 4 178 743 B1

**Claims**

1. A method of casting a steel semi-product from a liquid steel, the steel semi-product having a targeted composition in titanium of at least 3,5% in weight, the method comprising the following steps:

   A/ addition of aluminium to the liquid steel so that liquid steel contains at least 0,1% in weight of aluminium,
   B/ addition to the liquid steel of mineral compounds containing CaF2 and aluminium and calcium and optionally magnesium, to reach and maintain a slag composition wherein the ratio of CaO versus $Al_2O_3$ ($CaO/Al_2O_3$) is comprised from 0,7 to 2 and the slag contains up to 25% in weight of CaF2,
   C/ addition of titanium to the liquid steel to reach the targeted composition,
   D/ casting the steel in the form of a semi-product.

2. A method according to claim 1 wherein the amount of aluminium added is such that the liquid steel contains more than 0,2% in weight of aluminium.

3. A method according to claim 2, wherein the amount of aluminium added is such that the liquid steel contains more than 0,4% in weight of aluminium.

4. A method according to any of claims 1 to 3, wherein the steel semi-product
   contains boron in a minimum percentage in weight fulfilling following equation:

$$\%B \geq 0,45 \times \%Ti - 1,35\%$$

5. A method according to any of claims 1 to 4 wherein between steps A and B a heating step of the liquid steel is performed.

6. A method according to any of claims 1 to 5 wherein a step of addition of boron is performed after step C.

7. A method according to any of claims 1 to 5 wherein an addition of boron is performed during step B.

8. A method according to anyone of the previous claims wherein during step B, spar CaF2 is added so as to reach a composition in $CaF_2$ comprised from 6 to 15% in weight in the slag.

9. A method according to anyone of the previous claims wherein during step B, magnesia is added so as to reach a composition in MgO comprised from 5 to 15% in weight in the slag.

10. A method according to anyone of the previous claims, wherein during step B addition of mineral compounds is done to reach a slag composition wherein the ratio of CaO versus Al2O3 (CaO/Al2O3) is comprised between 0,9 and 1,3.

11. A method according to claims 1 to 7, wherein during step B addition of mineral compounds is done to reach a slag composition wherein the ratio of CaO versus Al2O3 (CaO/Al2O3) is comprised between 1,4 and 2, the slag furthermore comprising between 6 and 12% in weight of $CaF_2$.

12. A method according to anyone of the preceding claims wherein the steel semi-product has a targeted composition in titanium of at least 5,8% in weight.

13. A method according to claims 1 to 11 wherein the steel semi-product has the following composition expressed in content by weight:

   $0,01\% \leq C \leq 0,2\%$
   $3,5\% \leq Ti \leq 10\%$
   $(0,45 \times Ti) - 1,35\% \leq B \leq (0,45 \times Ti) + 0,70\%$
   $S \leq 0,03\%$
   $P \leq 0,04\%$

N ≤ 0,05%
O ≤ 0,05%

and optionally containing:

Si ≤ 1,5%
Mn ≤ 3%
Al ≤ 1,5%
Ni ≤ 1%
Mo ≤ 1%
Cr ≤ 3%
Cu ≤ 1%
Nb ≤ 0,1%
V ≤ 0,5%

and comprising precipitates of $TiB_2$ and optionally of $Fe_2B$, the balance being Fe and unavoidable impurities resulting from the elaboration.

**Patentansprüche**

1. Verfahren zum Gießen eines Stahlhalbzeugs aus flüssigem Stahl, wobei das Stahlhalbzeug eine angestrebte Zusammensetzung in Titan von mindestens 3,5 Gewichts-% aufweist, das Verfahren umfassend die folgenden Schritte:

   A/ Hinzufügen von Aluminium zum flüssigen Stahl, sodass der flüssige Stahl mindestens 0,1 Gewichts-% Aluminium enthält,
   B/ Hinzufügen von mineralischen Verbindungen, die CaF2 und Aluminium und Kalzium und gegebenenfalls Magnesium enthalten, zu dem flüssigen Stahl, um eine Schlackenzusammensetzung zu erreichen und beizubehalten, bei der das Verhältnis von CaO zu $Al_2O_3$ (CaO/$Al_2O_3$) zwischen 0,7 und 2 liegt und die Schlacke bis zu 25 Gewichts-% CaF2 enthält,
   C/ Hinzufügen von Titan zu dem flüssigen Stahl, um die gewünschte Zusammensetzung zu erreichen,
   D/ Gießen des Stahls in Form eines Halbzeugs.

2. Verfahren nach Anspruch 1, wobei die Menge des hinzugefügten Aluminiums derart ist, dass der flüssige Stahl mehr als 0,2 Gewichts-% Aluminium enthält.

3. Verfahren nach Anspruch 2, wobei die Menge des hinzugefügten Aluminiums derart ist, dass der flüssige Stahl mehr als 0,4 Gewichts-% Aluminium enthält.

4. Verfahren nach einem der Ansprüche 1 bis 3,
   wobei das Stahlhalbzeug
   Bor in einem Mindestgewichtsprozentsatz enthält, der der folgenden Gleichung entspricht:

$$\%B \geq 0,45 \times \%Ti - 1,35\%$$

5. Verfahren nach einem der Ansprüche 1 bis 4,
   wobei zwischen Schritt A und B ein
   Erhitzen des flüssigen Stahls durchgeführt wird.

6. Verfahren nach einem der Ansprüche 1 bis 5,
   wobei ein Schritt eines Hinzufügens von Bor
   nach Schritt C durchgeführt wird.

7. Verfahren nach einem der Ansprüche 1 bis 5,
   wobei ein Hinzufügen von Bor

während Schritt B durchgeführt wird.

8. Verfahren nach einem der vorherigen Ansprüche, wobei während des Schritts B spar CaF2 hinzugefügt wird, um eine Zusammensetzung an $CaF_2$ zu erreichen, die von 6 bis 15 Gewichts-% in der Schlacke umfasst.

9. Verfahren nach einem der vorherigen Ansprüche, wobei während Schritt B Magnesia hinzugefügt wird, um eine MgO-Zusammensetzung zu erreichen, die von 5 bis 15 Gewichts-% in der Schlacke umfasst.

10. Verfahren nach einem der vorherigen Ansprüche, wobei während Schritt B ein Hinzufügen von Mineralverbindungen erfolgt, um eine Schlackenzusammensetzung zu erreichen, bei der das Verhältnis von CaO zu Al2O3 (CaO/Al2O3) zwischen 0,9 und 1,3 liegt.

11. Verfahren nach einem der Ansprüche 1 bis 7, wobei in Schritt B ein Hinzufügen von Mineralverbindungen erfolgt, um eine Schlackenzusammensetzung zu erreichen, bei der das Verhältnis von CaO zu Al2O3 (CaO/Al2O3) zwischen 1,4 und 2 liegt, die Schlacke ferner umfassend zwischen 6 und 12 Gewichts-% $CaF_2$.

12. Verfahren nach einem der vorherigen Ansprüche, wobei das Stahlhalbzeug eine angestrebte Zusammensetzung in Titan von mindestens 5,8 Gewichts-% aufweist.

13. Verfahren nach einem der Ansprüche 1 bis 11, wobei das Stahlhalbzeug die folgende Zusammensetzung, ausgedrückt in Gewichtsanteilen, aufweist:

$0,01\% \leq C \leq 0,2\%$
$3,5\% \leq Ti \leq 10\%$
$(0,45 \times Ti) - 1,35\% \leq B \leq (0,45 \times Ti) + 0,70\%$
$S \leq 0,03\%$
$P \leq 0,04\%$
$N \leq 0,05\%$
$O \leq 0,05\%$

und optional Folgendes enthält:

$Si \leq 1,5\%$
$Mn \leq 3\%$
$Al \leq 1,5\%$
$Ni \leq 1\%$
$Mo \leq 1\%$
$Cr \leq 3\%$
$Cu \leq 1\%$
$Nb \leq 0,1\%$
$V \leq 0,5\%$

und umfassend Präzipitate von $TiB_2$ und optional von $Fe_2B$, wobei der Rest Fe und unvermeidliche Verunreinigungen sind, die aus der Herstellung resultieren.

**Revendications**

1. Procédé de coulée d'un semi-produit en acier à partir d'un acier liquide, le semi-produit en acier présentant une composition ciblée en titane d'au moins 3,5 % en poids, le procédé comprenant les étapes suivantes :

A/ ajout d'aluminium à l'acier liquide de sorte que l'acier liquide contienne au moins 0,1 % en poids d'aluminium,
B/ ajout à l'acier liquide de composés minéraux contenant du CaF2, de l'aluminium, du calcium et éventuellement du magnésium, afin d'atteindre et de maintenir une composition de laitier dans laquelle le rapport entre CaO et $Al_2O_3$ (CaO/$Al_2O_3$) est compris entre 0,7 et 2 et le laitier contient jusqu'à 25 % en poids de CaF2,
C/ ajout de titane à l'acier liquide pour atteindre la composition visée,
D/ coulée de l'acier sous forme d'un semi-produit.

**2.** Procédé selon la revendication 1, dans lequel la quantité d'aluminium ajoutée est telle que l'acier liquide contient plus de 0,2 % en poids d'aluminium.

**3.** Procédé selon la revendication 2, dans lequel la quantité d'aluminium ajoutée est telle que l'acier liquide contient plus de 0,4 % en poids d'aluminium.

**4.** Procédé selon l'une quelconque des revendications 1 à 3,
dans lequel le semi-produit en acier
contient du bore dans un pourcentage minimal en poids répondant à l'équation suivante : %B≥0,45x%Ti-1,35 %

**5.** Procédé selon l'une quelconque des revendications 1 à 4,
dans lequel, entre les étapes A et B, une
étape de chauffage de l'acier liquide est réalisée.

**6.** Procédé selon l'une quelconque des revendications 1 à 5,
dans lequel une étape d'ajout de bore est
réalisée après l'étape C.

**7.** Procédé selon l'une quelconque des revendications 1 à 5,
dans lequel un ajout de bore est
réalisé à l'étape B.

**8.** Procédé selon l'une quelconque des revendications précédentes dans lequel, au cours de l'étape B, du CaF2 est ajouté de manière à atteindre une composition en $CaF_2$ comprise entre 6 et 15 % en poids dans le laitier.

**9.** Procédé selon l'une quelconque des revendications précédentes dans lequel, au cours de l'étape B, de la magnésie est ajoutée de manière à atteindre une composition en MgO comprise entre 5 et 15 % en poids dans le laitier.

**10.** Procédé selon l'une quelconque des revendications précédentes, dans lequel, au cours de l'étape B, des composés minéraux sont ajoutés pour obtenir une composition de laitier dans laquelle le rapport entre le CaO et l'Al2O3 (CaO/Al2O3) est compris entre 0,9 et 1,3.

**11.** Procédé selon les revendications 1 à 7, dans lequel, au cours de l'étape B, des composés minéraux sont ajoutés pour obtenir une composition de laitier dans laquelle le rapport entre le CaO et l'Al2O3 (CaO/Al2O3) est compris entre 1,4 et 2, le laitier comprenant en outre entre 6 et 12 % en poids de $CaF_2$.

**12.** Procédé selon l'une quelconque des revendications précédentes, dans lequel le semi-produit en acier présente une composition ciblée en titane d'au moins 5,8 % en poids.

**13.** Procédé selon les revendications 1 à 11, dans lequel le semi-produit en acier présente la composition suivante, exprimée en teneur en poids :

0,01 % ≤ C ≤ 0,2 %
3,5 % ≤ Ti ≤ 10 %
(0,45 xTi) - 1,35 % ≤ B ≤ (0,45 xTi) + 0,70 %
S ≤ 0,03 %
P ≤ 0,04 %
N ≤ 0,05 %
O ≤ 0,05 %

et contenant éventuellement :

Si ≤ 1,5 %
Mn ≤ 3 %
Al ≤ 1,5 %
Ni ≤ 1 %
Mo ≤ 1 %
Cr ≤ 3 %

Cu $\leq$ 1 %
Nb $\leq$ 0,1 %
V $\leq$ 0,5 %

et comprenant des précipités de $TiB_2$ et éventuellement de $Fe_2B$, le reste étant constitué de Fe et d'impuretés inévitables résultant de l'élaboration.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130174942 A

- EP 3612657 A